# EUROPÄISCHE PATENTANMELDUNG

(11) **EP 0 615 874 A2**
(43) Veröffentlichungstag der Anmeldung: **21.09.1994**
(21) Anmeldenummer: 94103802.8
(22) Anmeldetag: 11.03.1994
(51) Int. Cl.: B60J 10/12

(54) **Verfahren zur Herstellung eines starren Deckels für ein Fahrzeugdach und nach dem Verfahren hergestellter Deckel**

(30) Priorität: 15.03.1993 DE 4308221
(71) Anmelder: METZELER Automotive Profiles GmbH, D-88131 Lindau (DE)
(72) Erfinder: Glagow, Klaus, D-88142 Wasserburg (DE); Brocke, Rolf, D-88239 Wangen (DE)
(74) Vertreter: Preissner, Nicolaus, Dipl.-Ing.

(57) **Zusammenfassung**

Bei einem Verfahren zur Herstellung eines starren Dekkels für ein Fahrzeugdach mit einer umlaufenden Dichtung gegenüber der Dachöffnung sowie einer Glasplatte, die mit einem seitlich überstehenden Rahmen verklebt ist und auf dem ein umlaufender, angenähert T-förmiger Alu-Rahmen befestigt ist, zwischen dem und der Dachöffnung eine Spaltdichtung verläuft, ist zur einfacheren Herstellung und leichteren Montage aus wenigeren Einzelteilen erfindungsgemäß vorgesehen, daß die Spaltdichtung (3) in Form eines koextrudierten Profils mit einem innenliegenden, sich vertikal erstreckenden Profilbereich (12) aus einem Elastomer und einem außenliegenden Hohlkammerprofil (13) aus Moosgummi hergestellt und als umlaufender Strang mit der Außenseite (19) des vertikalen Schenkels des T-förmigen Alu-Rahmens (15) verbunden wird und daß das so fertiggestellte Bauteil auf den überstehenden Randbereich des anderen, aus Glasplatte (1) und Grundrahmen (10) bestehenden Bauteils aufgesetzt und mit diesem verschraubt wird.

## Beschreibung

Die Erfindung bezieht sich auf ein Verfahren zur Herstellung eines starren Deckels für ein Fahrzeugdach mit einer umlaufenden Dichtung gegenüber der Dachöffnung, mit einer Glasplatte, die mit einem im Randbereich untergelegten und seitlich überstehenden Grundrahmen verklebt ist und auf dessen überstehendem Rand ein umlaufender, angenähert T-förmiger Alu-Rahmen befestigt ist, der mit einem freien Schenkel den Rand der Glasplatte und mit dem anderen freien Schenkel die Spaltdichtung zur Dachöffnung übergreift.

Ein derartiger Deckel und ein entsprechendes Herstellungsverfahren ist aus der DE-OS 36 39 894 bekannt. Dabei besteht dieser Deckel aus einer Vielzahl von Einzelteilen, die bei der Endmontage aufwendig zusammengefügt werden müssen. Dabei weist der untergelegte Innenrahmen einen hochgestellten Rand auf, auf den zunächst die entsprechend geformte und mit Metalleinlagen versehene Spaltdichtung aufgesteckt wird. Anschließend wird über diese Dichtung und der mit dem Innenrahmen verbundenen Glasplatte ein T-förmiges Aluprofil aufgelegt, das dann von unten nach Hochklappen einer die Befestigungslöcher überragenden Dichtlippe der Spaltdichtung mit eingesetzten Schrauben gegeneinander verspannt wird. Somit sind mehrere Arbeitsgänge und Hilfsmittel erforderlich, um einen fertigen Deckel zu schaffen.

Der vorliegenden Erfindung liegt demgegenüber die Aufgabe zugrunde, ein Verfahren zur Herstellung eines solchen Deckels anzugeben, mit dem ein solcher Deckel sehr viel einfacher hergestellt und insbesondere aus weniger Einzelteilen montiert werden kann.

Zur Lösung dieser Aufgabe ist erfindungsgemäß vorgesehen, daß die Spaltdichtung in Form eines koextrudierten Profils mit einem innenliegenden, sich vertikal erstreckenden Profilbereich aus einem Elastomer und einem außenliegenden Hohlkammerprofil aus Moosgummi hergestellt und als umlaufender Strang mit der Außenseite des vertikalen Schenkels des T-förmigen Alu-Rahmens verbunden wird und daß das so fertig gestellte Bauteil auf den überstehenden Randbereich des anderen, aus Glasplatte und Grundrahmen bestehenden Bauteils aufgesetzt und mit diesem verschraubt wird.

Damit liegen also für die Montage nur zwei Bauteile vor, nämlich einmal der T-förmige Alu-Rahmen mit der Spaltdichtung und zum anderen die Glasplatte mit dem umlaufenden Grundrahmen, die dann auf einfache Weise miteinander verbunden werden können.

Zweckmäßigerweise wird der Elastomerbereich der Spaltdichtung aus EPDM mit einer Shore-A-Härte von etwa 70 hergestellt.

Bei einem nach diesem Verfahren hergestellten Deckel ist in Weiterbildung der Erfindung vorgesehen, daß die mit dem auf den Grundrahmen aufgeschraubten T-förmigen Alu-Rahmen verbundene Spaltdichtung aus zwei Profilabschnitten in Form eines sich über die Vorderkante des Deckels erstreckenden Abschnittes A mit einer an der Unterkante des Elastomerbereiches anextrudierten und den Rand des Grundrahmens im Bereich der Befestigungsschrauben überdeckenden Zunge und einen sich über den übrigen Bereich des T-förmigen Alu-Rahmens erstreckenden Abschnitt B mit einer vom Elastomerbereich nach unten abragenden Zunge besteht.

Diese beiden Profilabschnitte können dann an ihren Stoßstellen miteinander verklebt sein.

Zur Befestigung der Spaltdichtung ist es möglich, daß die Spaltdichtung über ein doppelseitiges Klebeband zwischen Innenseite des Elastomerbereiches und Außenfläche des vertikalen Schenkels des T-förmigen Alu-Profils mit dem Alu-Profil verbunden ist.

Dabei ist es zweckmäßig, wenn der Elastomerbereich der Spaltdichtung eine zusätzliche, bandförmige Aluminium-Einlage zur Verhinderung eines Profilschwundes aufweist.

Es ist aber auch möglich, daß der T-förmige Alu-Rahmen auf seiner vertikalen Außenfläche eine umlaufende, hinterschnittene Nut und der Elastomerbereich einen entsprechenden, tannenbaumförmigen Ansatz zur Bildung einer Schwalbenschwanzverbindung aufweisen und daß der T-förmige Alu-Rahmen an seiner außenliegenden Unterkante mit einem stegförmigen Ansatz versehen ist, der von einem gewölbten Ansatz des Elastomerbereiches umgriffen ist.

Dabei sollte in den Elastomerbereich ein stabilisierendes Aluband einextrudiert sein, das einen unteren, gewölbten Clip zum Umfassen des stegförmigen Ansatzes aufweist.

Eine andere Möglichkeit besteht darin, daß der T-förmige Alu-Rahmen auf seiner vertikalen Außenfläche zwei umlaufende, nebeneinanderliegende und hinterschnittene Nuten und der Elastomerbereich zwei entsprechende, tannenbaumförmige Ansätze zur Bildung zweier Schwalbenschwanzverbindungen aufweisen.

Zur Verbindung von Grundrahmen und T-förmigem Alu-Rahmen ist es ferner möglich, daß der T-förmige Alu-Rahmen anstelle von Schraublöchern einen vertikalen, umlaufenden Raststeg mit seitlichen Rillen aufweist und daß der Grundrahmen über an den Raststeg einragenden Klammern mit dem T-förmigen Alu-Rahmen verbunden ist.

Eine weitere Befestigungsmöglichkeit kann darin bestehen, daß der T-förmige Alu-Rahmen anstelle von

Schraublöchern einzelne zylindrische, nach unten abragende Stifte aufweist, die die Verbindungslöcher des Grundrahmens durchdringen und nach der Montage nietartig umgebördelt sind.

Anhand einer schematischen Zeichnung sind Aufbau und Funktionsweise von Ausführungsbeispielen nach der Erfindung näher erläutert. Dabei zeigen:
- Fig. 1: eine Aufsicht auf den Deckel innerhalb der Dachöffnung,
- Fig. 2: einen Längsschnitt durch den Randbereich des Deckels an der Vorderkante mit einer aufge klebten Dichtung entsprechend der Schnittli nie II-II nach Fig.1,
- Fig. 3: eine gleichartige Dichtung nach Fig. 2 für die übrigen, umlaufenden Bereiche des Dek kels entsprechend der Schnittlinie III-III nach Fig.1,
- Fig. 4: einen Längsschnitt durch den Rand des Deckels mit einer schwalbenschwanzförmigen Befestigung der Spaltdichtung,
- Fig. 5: einen Längsschnitt durch den Randbereich des Deckels mit einer Doppel-Schwalbenschwanzbe festigung der Spaltdichtung und
- Fig. 6: eine weitere Befestigungsvariante des Innen rahmens mit dem Dichtungsbereich.

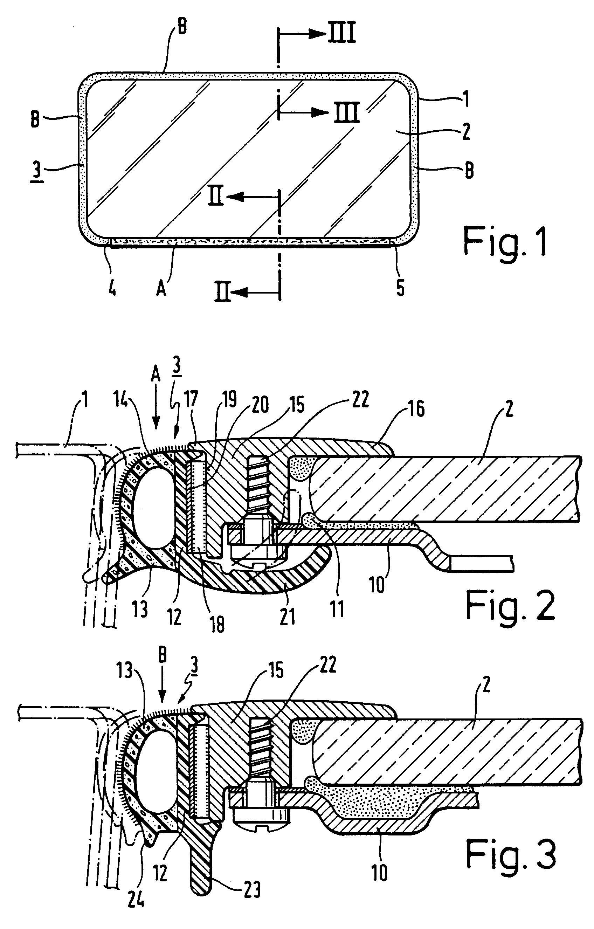

Nach der in Fig. 1 dargestellten Aufsicht auf ein Fahrzeugdach mit einer rechteckigen Dachöffnung 1 ist der im wesentlichen aus einer Glasplatte 2 bestehende Dekkel allseitig von einer Spaltdichtung 3 zur Dachöffnung 1 umschlossen. Diese Spaltdichtung 3 besteht dabei aus zwei unterschiedlichen Profilabschnitten, nämlich dem Profilabschnitt A an der zu öffnenden Vorderkante des Deckels und dem Profilabschnitt B, der die übrigen Bereiche des Deckels 2 umschließt. Dabei weist der Profilabschnitt A zum Profilabschnitt B zwei Stoßstellen 4 und 5 auf, an denen die beiden Profilabschnitte A und B miteinander verklebt sind.

In Fig. 2 ist ein Querschnitt durch den Randbereich des Deckels entsprechend der Schnittlinie II-II nach Fig. 1 gezeigt. Danach ist zunächst die Glasplatte 2 mit einem untergelegten und im Randbereich seitlich überstehenden Grundrahmen 10 über einen zwischengefügten Kleber 11 zu einer Baueinheit verbunden.

Die eigentliche Spaltdichtung 3 des Profilabschnittes A besteht aus einem innenliegenden, sich vertikal erstreckenden Profilbereich 12 aus einem Elastomer, z.B. aus EPDM mit einer Shore-A-Härte von etwa 70. An diesen Elastomerbereich 12 ist außenliegend ein Hohlkammerprofil 13 aus Moosgummi anextrudiert, wobei beide Teile auch durch Koextrusion hergestellt sein können. Die Außenfläche dieses Hohlkammerprofils 13 ist dann noch mit einer Beflockung 14 aus Polyester versehen, die dann gegen die Dachöffnung 1 abdichtet.
Zwischen Profilabschnitt A und Glasplatte 2 ist ferner ein umlaufender, im Querschnitt angenähert T-förmiger Rahmen 15 aus Aluminium vorgesehen, dessen einer freier Schenkel 16 die Glasplatte 2 überdeckt und dessen anderer Schenkel 17 teilweise die Spaltdichtung A überragt. Diese Spaltdichtung A ist nunmehr mittels eines doppelseitigen Klebebandes 18 zwischen der Innenseite des Elastomerbereiches 12 und der Außenfläche 19 des vertikalen Schenkels des T-förmigen Alu-Profils verklebt und damit fest verbunden. Dabei kann zur Verhinderung eines Profilschwundes im Elastomerbereich 12 noch eine zusätzliche Einlage aus einem Aluminiumband 20 vorgesehen sein.

Dieser Profilbereich A weist darüberhinaus eine vom unteren Ende des Elastomerbereiches 12 ausgehende und sich horizontal nach hinten erstreckende Lippe 21 auf, die den überstehenden Bereich des Grundrahmens 10 überdeckt.

Somit ergibt sich aus dem Spaltdichtungs-Profilbereich A und dem T-förmigen Alu-Profil ein einstückiges Bauteil, das dann auf den überstehenden Rand des Grundrahmens 10 aufgesetzt und über entsprechende Schrauben 22 mit diesem verbunden wird.

Damit ergibt sich also ein starrer Deckel, der soweit vorgefertigt ist, daß bei der Endmontage lediglich zwei Bauteile und zwar eines, bestehend aus Glasplatte 2 und Grundrahmen 10 und ein anderes, bestehend aus T-förmigem Aluprofil 15 und Spaltdichtung 3 miteinander verbunden werden müssen.

In Fig. 3 ist ein Querschnitt entsprechend der Schnittlinie III-III nach Fig. 1 durch den Profilabschnitt B des übrigen Dichtungsbereiches dargestellt. Hierbei ist der Profilabschnitt B der Spaltdichtung 3 im Prinzip in gleicher Weise wie nach Fig. 2 aufgebaut. Lediglich die den überstehenden Grundrahmenbereich 10 überdeckende Lippe 21 ist weggelassen und durch eine vom Elastomerbereich 12 nach unten abragende Zunge 23 ersetzt. Auch die Moosgummidichtung 13 kann geringfügig geändert und mit einer hier nach unten abragenden Dichtlippe 24 ausgebildet sein.

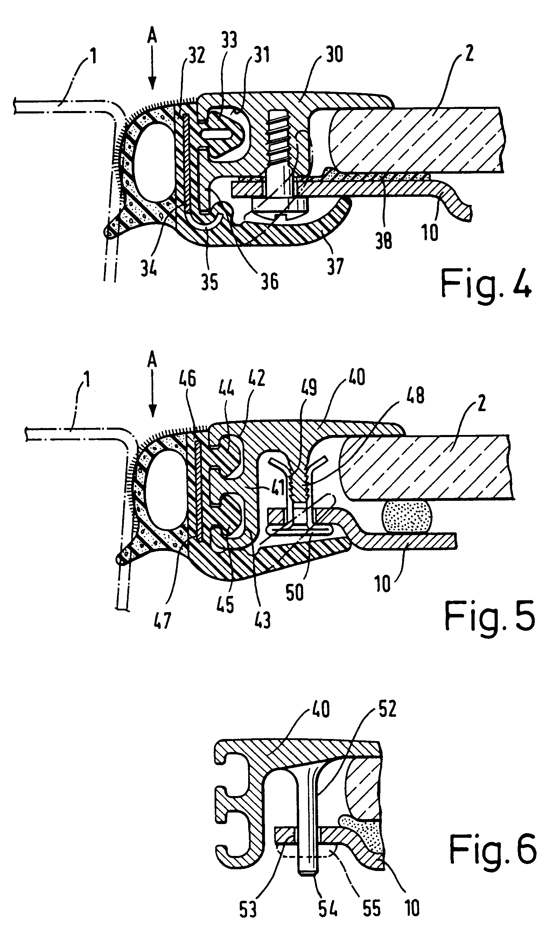

Eine weitere Gestaltungs- und Verbindungsmöglichkeit des Profilabschnittes A mit dem T-förmigen Alu-Profil 30 ist aus Fig. 4 zu ersehen. Hiernach weist der AluRahmen 30 auf seiner vertikalen Außenfläche eine umlaufende, hinterschnittene Nut 31 auf, während vom Elastomerbereich 32 des Profilabschnittes A ein entsprechender, tannenbaumförmiger Ansatz 33 abragt, der genau in die Nut 31 paßt und damit eine Schwalbenschwanzverbindung bildet. Darüberhinaus ist in den Elastomerbereich 32 noch ein stabilisierendes Aluband 34 einvulkanisiert, das am unteren Ende einen gebogenen clipsförmigen Ansatz 35 aufweist, der einen stegförmigen Ansatz 36 an der außenliegenden Unterkante des Alu-Profils 30 umfaßt.

Auch bei diesem Profilabschnitt ist unten am Elastomerbereich 32 eine sich horizontal zum Rahmen 10 erstrekkende Dichtlippe 37 vorgesehen, die aber für die entsprechenden Profilbereiche B entfällt und für die stattdessen eine abragende Dichtlippe entsprechend der Lippe 23 nach Fig. 3 vorgesehen ist.

Anstelle einer Verklebung von Glasplatte 1 und Rahmen 10 ist auch eine entsprechende Moosgummieinlage 38 möglich, die mit beiden Teilen verklebt oder auch nur zwischengelegt sein kann.

Eine weitere Verbindungsmöglichkeit ist in Fig. 5 dargestellt. Dabei weist der T-förmige Alu-Rahmen 40 auf der dem Spaltdichtungsabschnitt A zugewandten Seite einen vertikalen Steg 41 auf, in dessen Außenfläche zwei umlaufende, hinterschnittene Nuten 42 und 43 eingeschnitten sind, in die entsprechende, tannenbaumförmige Ansätze 44 und 45 des Profilabschnittes A einragen und damit zwei schwalbenschwanzförmige Verbindungen ergeben. Auch hier kann zur Stabilisierung noch ein Alu-Band 47 in den Elastomerbereich 46 einvulkanisiert sein.

Die Befestigung von Grundrahmen 10 am Alu-Rahmen 40 ist hier auf andere Weise gelöst. Dabei weist der Alu-Rahmen 40 anstelle von Schraublöchern einen vertikalen umlaufenden Raststeg 48 mit seitlichen Rillen 49 auf, wobei Grundrahmen 10 und Alu-Rahmen 40 dann über die entsprechenden Bohrungslöcher im Grundrahmen 10 eingeschobene Klammern 50 miteinander verspannt und verbunden sind.

Eine weitere Verbindungsmöglichkeit ist in Fig. 6 dargestellt. Dabei weist der T-förmige Alu-Rahmen 40 anstelle von Schraublöchern einzelne zylindrische, nach unten abragende Stifte 52 auf, die die Verbindungslöcher 53 des Grundrahmens 10 mit einem Ansatz 54 durchdringen. Dieser Ansatz 54 wird dann nach der Montage der beiden Bauteile nietartig umgebördelt, so daß sich damit praktisch ein Nietkopf 55 ergibt, der ebenfalls eine feste Verbindung der beiden Bauteile gewährleistet.

Damit ergibt sich also insgesamt - wie an den verschiedenen Ausführungsbeispielen gezeigt ist - ein starrer Deckel für eine Dachöffnung, der aus nur zwei vorgefertigten Bauteilen bei der Montage auf einfache Weise zusammengesetzt und zu einem fertigen Deckel verbunden werden kann.

## Patentansprüche

1. Verfahren zur Herstellung eines starren Deckels für ein Fahrzeugdach mit einer umlaufenden Dichtung gegenüber der Dachöffnung, mit einer Glasplatte, die mit einem im Randbereich untergelegten und seitlich überstehenden Grundrahmen verklebt ist und auf dessen überstehendem Rand ein umlaufender, angenähert T-förmiger Aluminiumrahmen befestigt ist, der mit einem freien Schenkel den Rand der Glasplatte und mit dem anderen freien Schenkel eine Spaltdichtung zur Dachöffnung übergreift, dadurch gekennzeichnet, daß die Spaltdichtung (3) in Form eines koextrudierten Profils mit einem innenliegenden, sich vertikal erstreckenden Profilbereich (12; 32; 46) aus einem Elastomer und einem außenliegenden Hohlkammerprofil (13) aus Moosgummi hergestellt und als umlaufender Strang mit der Außenseite (19) des vertikalen Schenkels des T-förmigen Alu-Rahmens (15; 30; 40) verbunden wird und daß das so fertig gestellte Bauteil auf den überstehenden Randbereich des anderen, aus Glasplatte (1) und Grundrahmen (10) bestehenden Bauteils aufgesetzt und mit diesem verschraubt wird.

2. Verfahren nach Anspruch 1, dadurch gekennzeichnet, daß der Elastomerbereich aus EPDM mit einer Shore-A-Härte von etwa 70 hergestellt wird.

3. Nach dem Verfahren nach Anspruch 1 hergestellter Deckel, dadurch gekennzeichnet, daß die mit dem auf den Grundrahmen (10) aufgeschraubten T-förmigen Alu-Rahmen (15; 30; 40) verbundene Spaltdichtung (3) aus zwei Profilabschnitten (A, B) in Form eines sich über die Vorderkante des Deckels (1) erstrekkenden Abschnittes (A) mit einer an der Unterkante des Elastomerbereiches (12; 32; 46) anextrudierten und den Rand des Grundrahmens (10) im Bereich der Befestigungsschrauben (22) überdeckenden Zunge (21; 37) und einen sich über den übrigen Bereich des T-förmigen Alu-Rahmens (15; 30; 40) erstreckenden Profilabschnitt (B) mit einer vom Elastomerbereich (12; 32; 46) nach unten abragenden Zunge (23) besteht.

4. Deckel nach Anspruch 3, dadurch gekennzeichnet, daß die beiden Profilabschnitte (A, B) an ihren Stoßstellen (4, 5) miteinander verklebt sind.

5. Deckel nach Anspruch 3, dadurch gekennzeichnet, daß die Spaltdichtung (3) über ein doppelseitiges Klebeband (18) zwischen Innenseite des Elastomerbereiches (12) und Außenfläche (19) des vertikalen Schenkels des T-förmigen Alu-Profils (15) mit dem Alu-Profil (15) verbunden ist.

6. Deckel nach Anspruch 5, dadurch gekennzeichnet, daß der Elastomerbereich (12) der Spaltdichtung (3) eine zusätzliche Aluminium-Einlage (20) zur Verhinderung eines Profilschwundes aufweist.

7. Deckel nach Anspruch 3, dadurch gekennzeichnet, daß der T-förmige Alu-Rahmen (30) auf seiner vertikalen Außenfläche eine umlaufende, hinterschnittene Nut (31) und der Elastomerbereich (32) einen entsprechenden, tannenbaumförmigen Ansatz (33) zur Bildung einer Schwalbenschwanzverbindung aufweisen und daß der T-förmige Alu-Rahmen (30) an seiner außenliegenden Unterkante mit einem stegförmigen Ansatz (36) versehen ist, der von einem gewölbten Ansatz (35) des Elastomerbereiches (32) umgriffen ist.

8. Deckel nach Anspruch 7, dadurch gekennzeichnet, daß in den Elastomerbereich (32) ein stabilisierendes Aluband (34) einextrudiert ist, das einen unteren, geschlitzten, gewölbten Clip (35) zum Umfassen des stegförmigen Ansatzes (36) aufweist.

9. Deckel nach Anspruch 3, dadurch gekennzeichnet, daß der T-förmige Alu-Rahmen (40) auf seiner vertikalen Außenfläche zwei umlaufende, nebeneinanderliegende und hinterschnittene Nuten (42, 43) und der Elastomerbereich (46) zwei entsprechende, tannenbaumförmige Ansätze (44, 45) zur Bildung zweier Schwalbenschwanzverbindungen aufweisen.

10. Deckel nach Anspruch 9, dadurch gekennzeichnet, daß der T-förmige Alu-Rahmen (40) anstelle von Schraublöchern einen vertikalen, umlaufenden Raststeg (48) mit seitlichen Rillen (49) aufweist und daß der Grundrahmen (10) über an den Raststeg (48) einrastenden Klammern (50) mit dem T-förmigen AluRahmen (40) verbunden ist.

11. Deckel nach Anspruch 10, dadurch gekennzeichnet, daß der T-förmige Alu-Rahmen (40) anstelle von Schraublöchern einzelne zylindrische und nach unten abragende Stifte (52) aufweist, die die Verbindungslöcher (53) des Grundrahmens (10) durchdringen und nach der Montage nietartig (55) umgebördelt sind.
